# EUROPÄISCHE PATENTSCHRIFT

(11) **EP 1 123 886 B1**
(45) Veröffentlichungstag und Bekanntmachung des Hinweises auf die Patenterteilung: **25.08.2004**
(21) Anmeldenummer: 01810104.8
(22) Anmeldetag: 02.02.2001
(51) Int. Cl.: B65G 54/02, B65G 47/244

(54) **Vorrichtung zum Transportieren von Produkten zwischen mindestens zwei Stationen**
Apparatus for transporting products between at least two work stations
Dispositif de transport de produits entre au moins deux postes de travail

(30) Priorität: 09.02.2000 CH 2642000
(43) Veröffentlichungstag der Anmeldung: 16.08.2001
(73) Patentinhaber: SIG Pack Systems AG, 8222 Beringen (CH)
(72) Erfinder: Frulio, Ralf, 79789 Jestetten (DE)
(74) Vertreter: Clerc, Natalia

(56) Entgegenhaltungen:
- EP-A- 0 813 494
- DE-A- 2 119 401
- FR-A- 2 642 054
- US-A- 3 837 474
- US-A- 5 579 890

## Beschreibung

Aus der EP-B-813 494 (WO-A-96/27544) ist eine Vorrichtung zum Transportieren von Produkten zwischen einer Aufgabestation und einer Abgabestation bekannt. Sie umfasst eine stationäre, als geschlossene Schleife ausgebildete Führung, auf welcher mehrere Förderelemente zur Aufnahme der Produkte beweglich geführt sind. An der Führung sind viele Spulen hintereinander angeordnet, die mit je mindestens einem Permanentmagneten pro Förderelement einen Linearmotor bilden. An der Führung sind mehrere Positionsfühler hintereinander angeordnet, um die Position der Förderelemente zu messen.

DE-A-2119401 beschreibt eine mit einem Linearmotor arbeitende Transportvorrichtung bei galvanotechnischen Anlagen. Diese Vorrichtung weist einen Transportwagen mit einer motorbetriebenen Hubvorrichtung inklusive Tragarm auf. Mittels dieses Tragarms lassen sich Trommelaggregate in Behälter eintauchen und wieder entfernen. Der vorliegenden Erfindung liegt die Aufgabe zugrunde, eine Vorrichtung der eingangs genannten Art derart weiterzubilden, dass sie vielseitiger in der Anwendung ist. Diese Aufgabe wird durch die Merkmalskombination der Ansprüche gelöst.

Nachfolgend werden Ausführungsbeispiele der Erfindung anhand der Zeichnungen erläutert. Darin zeigt:
- Figur 1: eine schematische perspektivische Ansicht einer ersten Ausführungsform,
- Figur 2: einen Querschnitt,
- Figur 3: einen Längsschnitt,
- Figur 4: eine perspektivische Ansicht von Teilen des Förderelementes,
- Figuren 5a bis 5d: eine Variante des Transportelementes, und
- Figuren 6 bis 10: Draufsichten auf mehrere unterschiedliche Anwendungen der erfindungsgemässen Vorrichtung.

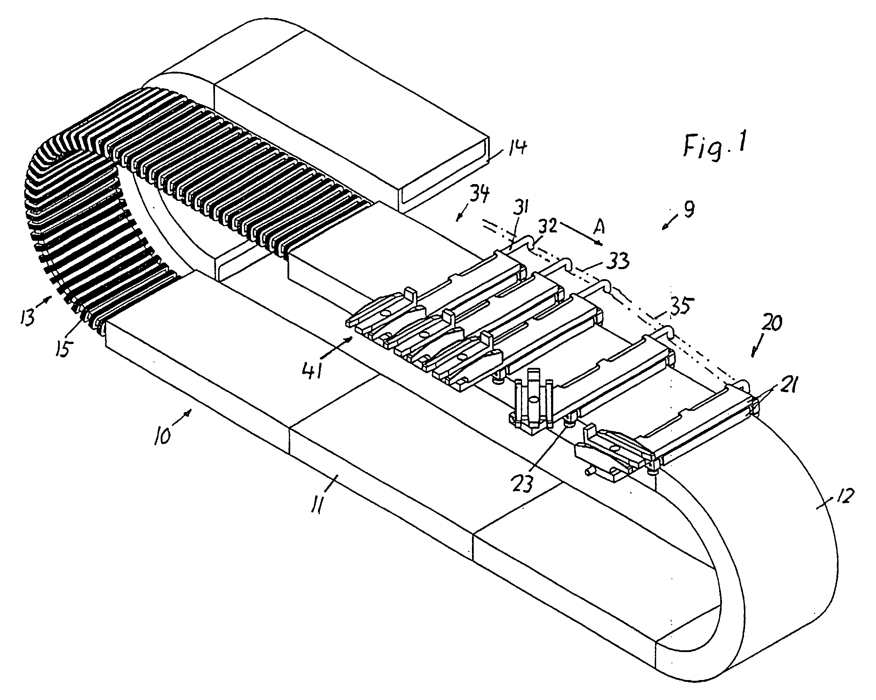

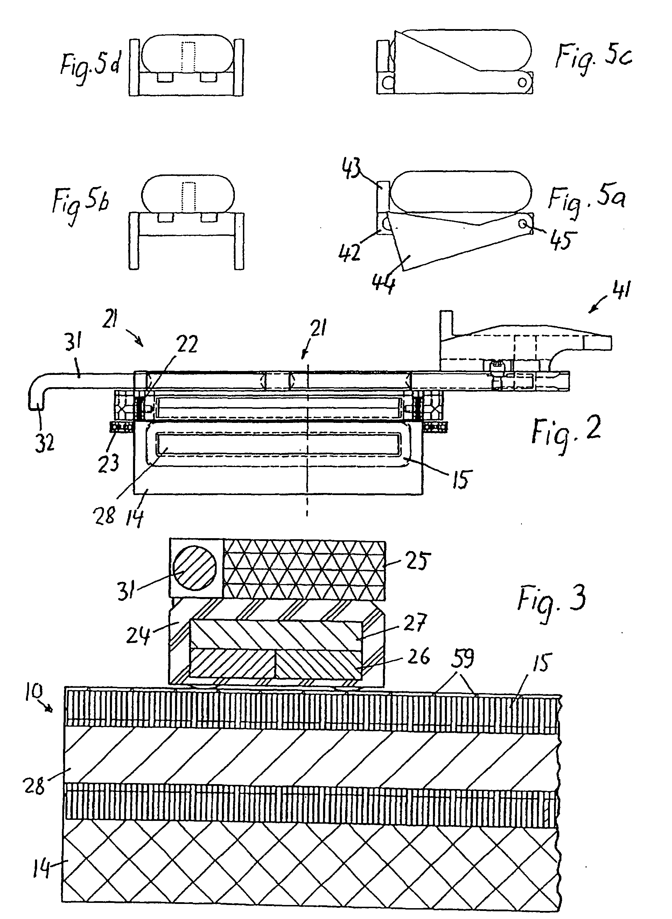

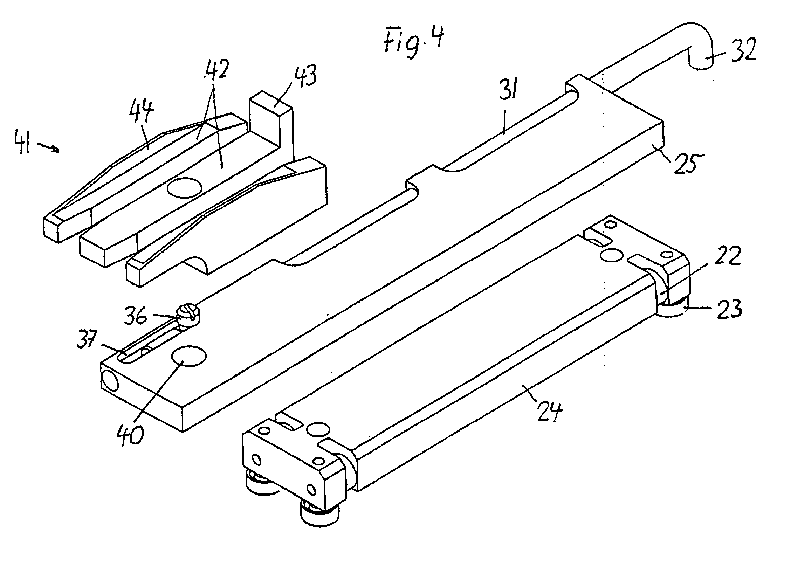

Die Vorrichtung 9 nach Figuren 1 bis 4 umfasst eine umlaufende, geschlossene Führung 10, welche aus Modulen 11, 12, nämlich einer wählbaren Anzahl geradliniger Module 11 und zwei Umlenkmodulen 12 zusammengesetzt ist. In der linken oberen Seite der Figur 1 sind die Module 11, 12 getrennt in Spuleneinheiten 13 und tragendes Gehäuse 14 dargestellt. Das Gehäuse 14 hat einen rechtekkigen Querschnitt. Die Spuleneinheiten 13 umfassen eine Vielzahl in Transportrichtung A hintereinander angeordneter, separat angesteuerter Spulen 15, deren Spulenachsen in Transportrichtung A verlaufen. Auf der Führung 10 sind mehrere Förderelemente 20 in Transportrichtung A verschiebbar geführt. Jedes Förderelement 20 umfasst einen Wagen 21 mit Führungsrollen 22, 23, die auf der Führung 10 abrollen. Die Wagen 21 sind in Transportrichtung A höchstens halb so lang wie quer dazu. Dadurch wird bei grosser Beschleunigungs- und Verzögerungsleistung in Transportrichtung A eine gedrungene Bauweise erreicht, was die Einsatzmöglichkeit der Vorrichtung 9 vervielfältigt. Jeder Wagen 21 besteht aus einem Unterteil 24 und einem auf diesem befestigten Oberteil 25. Im Unterteil 24 sind die Führungsrollen 22, 23 drehbar gelagert. Der Unterteil 24 enthält mindestens einen, im dargestellten Beispiel zwei Permanentmagnete 26, welche mit den Spulen 15 zusammen einen Linearmotor bilden. Auf der von der Führung 10 abgewandten Seite der Magnete 26 ist ein Rückschluss-Eisen 27 angeordnet, das mit dem Eisen-Spulenkern 28 zusammenwirkt.

Im Rückführbereich der Führung 10 können die Förderelemente 20 auch in anderer Weise transportiert werden, beispielsweise über ein umlaufendens Band mit Permanentmagneten oder über eine Kette mit Mitnehmern.

Im Oberteil 25 ist eine Betätigungsstange 31 quer zur Transportrichtung A verschiebbar geführt. Das eine, den Wagen 21 überragende Ende der Stange 31 ist nach unten abgebogen und bildet einen Stift 32, der in einer in Figur 1 strichpunktiert angedeuteten, gestellfesten Führungsnut 33 geführt ist, die längs der Arbeitsstrecke 34 einen gegen die Führung 10 konvergierenden Abschnitt 35 aufweist. Im Rückführast der Führung 10 hat die Nut 33 einen entsprechenden divergierenden Abschnitt. Am andern Ende ist in die Stange 31 ein vertikaler Querstift 36 eingeschraubt, der die Oberseite des Oberteils 25 überragt und in einem Langloch 37 des Oberteils 25 geführt ist.

Auf dem Oberteil 25 ist in einer Querbohrung 40 ein Transportelement 41 schwenkbar gelagert, in den Beispielen nach Figuren 1 bis 5 in Form eines Tragelementes 42. Das Tragelement 42 ist um eine senkrecht zur Transportrichtung A und zur Stange 31 verlaufende Achse schwenkbar. Es hat auf der einen Seite einen vertikal abstehenden Anschlag 43. Unten hat es eine radial zur Schwenkachse verlaufende Nut, in welcher der Stift 36 eingreift. Seitlich hat das Tragelement 42 schmale, nach oben anstehende Führungswände 44. Während des Durchlaufs des Abschnitts 35 der Nut 33 wird das Tragelement 42 aus einer Anfangsstellung, in welcher die Führungswände 44 quer zur Transportrichtung A verlaufen, um 90° gedreht, so dass die Führungswände 44 am Ende der Arbeitsstrecke parallel zur Transportrichtung A sind. Wie aus Figur 1 ersichtlich ist, sind die Tragelemente 42 seitlich neben der Führung 10 angeordnet.

In Figuren 5a bis 5d ist eine Variante des Tragelements 42 dargestellt, in welcher die Führungswände 44 am vorderen Ende um horizontale Achsen 45 schwenkbar gelagert sind. Die Schwenkbewegung der Führungswände von der abgesenkten Stellung gemäss Figur 5a und 5b in die angehobene Stellung gemäss Figur 5c und 5d kann zum Beispiel durch Auflaufen der Unterseite der Führungswände 44 auf geneigten Flächen des Oberteils 25 während der Drehbewegung des Tragelementes 42 erfolgen.

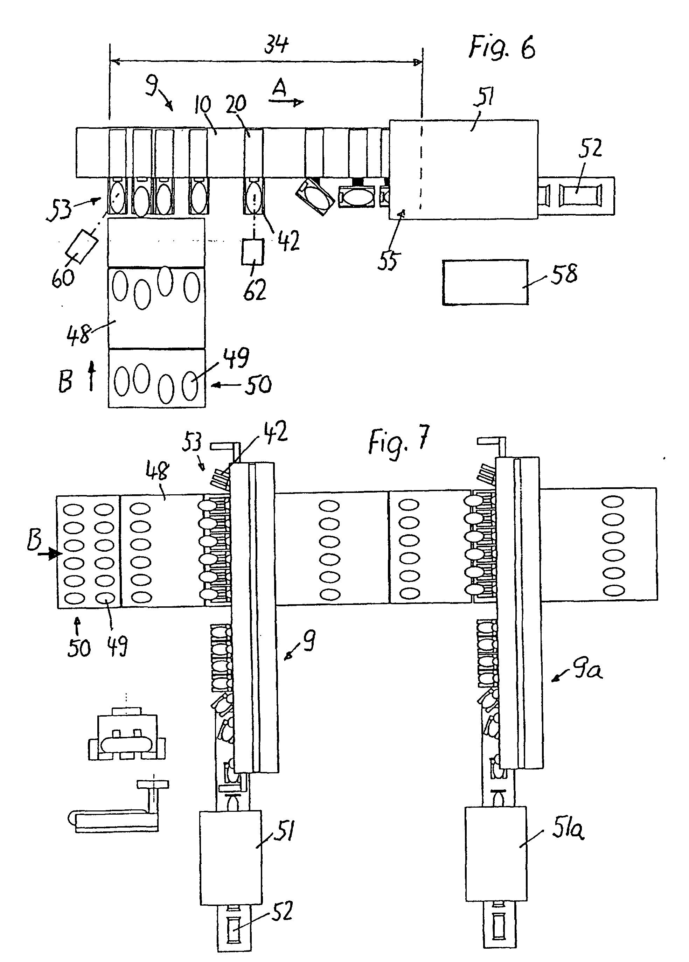

Die Figuren 6 bis 10 zeigen verschiedene Anwendungen der beschriebenen Vorrichtung 9.

Bei der Anwendung nach Figur 6 ist die Vorrichtung 9 eingesetzt zwischen einem Zufuhrförderband 48, auf welchem die Produkte 49 in Reihen 50 angeliefert werden, und einer Schlauchbeutel-Verpackungsmaschine 51, in welcher die Produkte in Beutel 52 verpackt werden. Die Produkte 49 sind länglich. Auf dem Band 48 ist die Längserstreckung der Produkte 48 in Förderrichtung B des Bandes 48. In der Aufgabestation 53 werden die Produkte 49 reihenweise auf die Tragelemente 42 einer entsprechenden Anzahl bereitstehender Förderelemente 20 aufgeschoben. Sobald die Tragelemente 42 gefüllt sind, werden die Förderelemente 20 längs der Führung 10 auf der Arbeitsstrecke 34 beschleunigt und voneinander so distanziert, dass sie an der Abgabestation 55 in der Verpackungsmaschine mit regelmässigem und grösserem Abstand eintreffen. Auf dem Weg zur Abgabestation 55 werden die Tragelemente 42 um 90° gedreht, so dass die Längserstreckung der Produkte in Förderrichtung A weist.

Eine Steuereinrichtung 58 steuert sowohl die Vorrichtung 9 als auch die Verpackungsmaschine 51. Die Position der Förderelemente 20 wird mit einer Vielzahl von längs der Führung 10 verteilten Hall-Sensoren 59 ermittelt, die mit den Permanentmagneten 26 zusammenwirken und mit der Steuereinrichtung 58 verbunden sind. Ebenso können mehrere optische Sensoren 60 die korrekte Beladung der Tragelemente 42 mit den Produkten 49 überwachen. Ein weiterer Sensor 62 kann schadhafte Produkte 49 erkennen und gegebenenfalls mittels einer Blasdüse vom betreffenden Tragelement 42 wegblasen. Die Steuereinrichtung 58 kann so programmiert werden, dass bei der Abgabestation 55 das betreffende leere Tragelement 42 beschleunigt weggefahren und das nächste Tragelement 42 beschleunigt zugeführt wird, so dass die Verpackungsmaschine 51 kontinuierlich betrieben werden kann. Die Steuereinrichtung 58 ist analog der in der EP-B-813 494 beschriebenen aufgebaut und ihre Funktionsweise ist analog. Auf diese Schrift wird deshalb verwiesen.

Die Anwendung nach Figur 7 ist analog aufgebaut wie jene nach Figur 6, nur dass das Förderband 48 unter der ersten Aufgabestelle 53 durchgeht. Die Führung 10 ist etwas höher angeordnet und die Tragelemente 42 sind als flache Gabeln ausgebildet, die nur knapp oberhalb des Bandes 48 durchlaufen. Wenn kein Förderelement 20 an der Aufgabestation 53 ist, wenn eine Reihe 50 von Produkten 49 eintrifft, wird diese Reihe 50 unter der Führung 10 hindurch zu einer zweiten Vorrichtung 9a der beschriebenen Art weiter gefördert. Auf diese Weise können also mit dem gleichen Förderband 48 mehrere Verpackungsmaschinen 51, 51a beliefert werden, wozu die zugehörigen Steuereinrichtungen 58 entsprechend programmiert und miteinander koordiniert werden müssen.

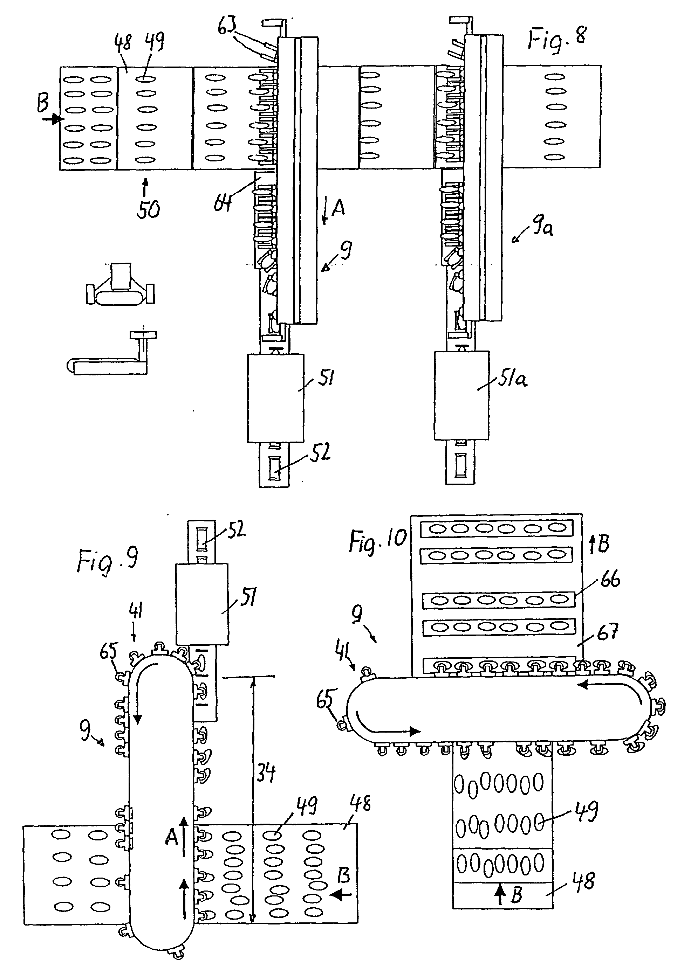

Bei der Anwendung nach Figur 8 sind die Transportelemente Schiebegabeln 63, zwischen welche die Produkte 49 eingeschoben werden. Sobald die Reihe 50 von den Gabeln 63 erfasst ist, werden die betreffenden Förderelemente 20 in Richtung A beschleunigt. An das Band 48 schliesst seitlich mit geringem Abstand ein Gleitblech 64 an, auf welchem die Produkte 49 gleiten und gedreht werden.

Bei der Anwendung nach Figuren 9 und 10 haben die Transportelemente 41 Saugnäpfe 65, die längs der Arbeitsstrecke 54 mit einer nicht dargestellten Vakuumquelle verbunden sind. Bei der Anwendung nach Figur 10 dient die Vorrichtung 9 zum Umorientieren und Umgruppieren der Produkte 49 und zum Beladen von Trays 66, die auf einem weiteren Förderband 67 angeliefert und nach dem Befüllen abtransportiert werden.

Die beschriebene Vorrichtung ist sehr vielseitig und flexibel in der Anwendung. Sie ist modular aufgebaut. Dies erleichtert die Anpassung an unterschiedliche Verhältnisse und reduziert die Herstellkosten. Einzelne schadhafte Produkte können gezielt ausgeschieden werden. Die Vorrichtung hat einen geringen Platzbedarf und ist servicefreundlich.

## Patentansprüche

1. Vorrichtung zum Transportieren von Produkten (49) längs einer Arbeitsstrecke (34) zwischen mindestens zwei Stationen, insbesondere einer Aufgabestation (53) und einer Abgabestation (55), umfassend eine stationäre, als geschlossene Schleife ausgebildete Führung (10), auf welcher mehrere Förderelemente (20) zur Aufnahme der Produkte (49) beweglich geführt sind, wobei an der Führung (10) eine Vielzahl von hintereinander angeordneten, separat angesteuerten Spulen (15) angeordnet ist und jedes Förderelement (20) mindestens einen Permanentmagneten (26) aufweist, der in der Kombination mit den Spulen (15) einen Linearmotor bildet, wobei an der Führung (10) eine Vielzahl von hintereinander angeordneten Positionsfühlern (59) angeordnet ist, um die Position der Förderelemente (20) zu messen, **dadurch gekennzeichnet, dass** jedes Förderelement (20) einen auf der Führung (10) verschiebbar geführten Wagen (21) und ein auf dem Wagen (21) beweglich gelagertes Transportelement (41) für die Produkte (49) umfasst, dass die Bewegung des Transportelementes (41) relativ zum Wagen (21) durch Steuermittel (31) gesteuert ist und dass das Transportelement (41) um eine quer zur Transportrichtung (A) des Wagens (21) verlaufende Achse schwenkbar ist und/oder quer zur Transportrichtung (A) auf dem Wagen (21) verschiebbar ist.

2. Vorrichtung nach Anspruch 1, wobei das Transportelement (41) seitlich über die Führung (10) hinausragt.

3. Vorrichtung nach einem der Ansprüche 1 oder 2, wobei der Wagen (21) in Transportrichtung (A) höchstens halb so lang ist wie quer dazu.

4. Vorrichtung nach einem der Ansprüche 1 bis 3, wobei jeder Wagen (21) mehrere Führungsrollen (22, 23) aufweist, die an der Führung (10) abrollen.

5. Vorrichtung nach einem der Ansprüche 1 bis 4, wobei das Transportelement (41) als Schiebemitnehmer (63) oder als Traggabel (42) ausgebildet ist.

6. Vorrichtung nach einem der Ansprüche 1 bis 5, wobei das Transportelement (41) einen Saugnapf (65) zum Erfassen der Produkte (49) aufweist.

7. Vorrichtung nach einem der Ansprüche 1 bis 6, wobei die Spulen (15) einen Eisenkern (28) enthalten und in den Wagen (21) Rückschluss-Eisen (27) angeordnet sind.

8. Verwendung der Vorrichtung nach einem der Ansprüche 1 bis 7 zum Überführen der Produkte (49) von einer ersten Produktorientierung in eine zweite Orientierung zwischen den beiden Stationen (53, 55).

## Claims

1. Apparatus for transporting products (49) along an operating path (34) between at least two stations, in particular a supply station (53) and a discharge station (55), comprising a stationary guide (10) which is designed as a closed loop and on which a plurality of conveying elements (20) are guided in a moveable manner for the purpose of accommodating the products (49), it being the case that a multiplicity of separately activated solenoids (15) are arranged one behind the other on the guide (10) and each conveying element (20) has at least one permanent magnet (26) which, in combination with the solenoids (15), forms a linear motor, and that a multiplicity of positioning sensors (59) are arranged one behind the other on the guide (10) in order to measure the position of the conveying elements (20), **characterized in that** each conveying element (20) comprises a carriage (21), which is guided in a displaceable manner on the guide (10), and a transporting element (41), which is mounted in a moveable manner on the carriage (21) and is intended for the products (49), **in that** the movement of the transporting element (41) relative to the carriage (21) is controlled by control means (31), and **in that** the transporting element (41) can be pivoted about an axis which runs transversely to the transporting direction (A) of the carriage (21) and/or can be displaced on the carriage (21) transversely to the transporting direction (A).

2. Apparatus according to Claim 1, in which the transporting element (41) projects laterally beyond the guide (10).

3. Apparatus according to either of Claims 1 and 2, in which the carriage (21) is, at most, half as long in the transporting direction (A) as it is transversely thereto.

4. Apparatus according to one of Claims 1 to 3, in which each carriage (21) has a plurality of guide rollers (22, 23) which roll on the guide (10).

5. Apparatus according to one of Claims 1 to 4, in which the transporting element (41) is designed as a sliding-action carry-along element (63) or as a carrying fork (42).

6. Apparatus according to one of Claims 1 to 5, in which the transporting element (41) has a suction cup (65) for grouping the products (49).

7. Apparatus according to one of Claims 1 to 6, in which the solenoids (15) contain an iron core (28) and return elements (27) are arranged in the carriages (21).

8. Use of the apparatus according to one of Claims 1 to 7 for transferring the products (49) from a first orientation into a second orientation between the two stations (53, 55).

## Revendications

1. Dispositif de transport de produits (49) le long d'une section de travail (34) entre au moins deux postes, notamment un poste de chargement (53) et un poste de déchargement (55), comprenant un guide stationnaire (10), réalisé sous forme de boucle fermée, sur lequel plusieurs éléments de convoyage (20) sont guidés de manière mobile pour recevoir les produits (49), une pluralité de bobines (15) disposées les unes derrière les autres, commandées séparément, étant disposée sur le guide (10) et chaque élément de convoyage (20) présentant au moins un aimant permanent (26) qui forme conjointement avec les bobines (15) un moteur linéaire, une pluralité de palpeurs de position (59) disposés les uns derrière les autres étant disposée sur le guide (10), afin de mesurer la position des éléments de convoyage (20), **caractérisé en ce que** chaque élément de convoyage (20) comprend un chariot (21) guidé de manière coulissante sur le guide (10) et un élément de transport (41) pour les produits (49) monté mobile sur le chariot (21), **en ce que** le mouvement de l'élément de transport (41) est commandé par rapport au chariot (21) par des moyens de commande (31) et **en ce que** l'élément de transport (41) peut pivoter autour d'un axe s'étendant transversalement à la direction de transport (A) du chariot (21) et/ou peut coulisser transversalement à la direction de transport (A) sur le chariot (21).

2. Dispositif selon la revendication 1, dans lequel l'élément de transport (41) dépasse latéralement au-delà du guide (10).

3. Dispositif selon l'une quelconque des revendications 1 ou 2, dans lequel le chariot (21), dans la direction de transport (A), est au maximum moitié moins long que dans la direction transversale.

4. Dispositif selon l'une quelconque des revendications 1 à 3, dans lequel chaque chariot (21) présente plusieurs galets de guidage (22, 23) qui roulent sur le guide (10).

5. Dispositif selon l'une quelconque des revendications 1 à 4, dans lequel l'élément de transport (41) est réalisé en tant que moyen d'entraînement coulissant (63) ou en tant que fourche de support (42).

6. Dispositif selon l'une quelconque des revendications 1 à 5, dans lequel l'élément de transport (41) présente une coupelle de succion (65) pour saisir les produits (49).

7. Dispositif selon l'une quelconque des revendications 1 à 6, dans lequel les bobines (15) contiennent un noyau de fer (28) et des fers de culasse (27) sont disposés dans les chariots (21).

8. Utilisation du dispositif selon l'une quelconque des revendications 1 à 7, pour le transfert des produits (49) d'une première orientation de produits dans une deuxième orientation entre les deux postes (53, 55).
